# EUROPEAN PATENT APPLICATION

(11) **EP 2 843 953 A1**
(43) Date of publication of application: **04.03.2015**
(21) Application number: 14177734.2
(22) Date of filing: 18.07.2014
(51) Int. Cl.: H04N 19/70, H04N 19/30

(54) **System to visually display and demonstrate hearing assistance device features**

(30) Priority: 19.07.2013 US 201313946865
(71) Applicant: Starkey Laboratories, Inc., Eden Prairie, MN 55344 (US)
(72) Inventor: Elazizi, Hanaa, Savage, MN Minnesota 55378 (US); Seel, Erin, St. Anthony, MN Minnesota 55421 (US); Neff, Lori, Minneapolis, MN Minnesota 55406 (US); Hotchkiss, Michelle, Prior Lake, MN Minnesota 55372 (US)
(74) Representative: UEXKÜLL & STOLBERG

(57) **Abstract**

A method to playback media of a feature of a hearing aid may include establishing a communication link between a computing device and a hearing assistance device; obtaining, over the communications link, a parameter of a feature of the hearing assistance device; querying from the computing device, using the obtained parameter as an input, a storage device external to the computing device for media associated with the feature; receiving the media associated with the feature from the storage device external to the computing device; and presenting the media received in response to the query to a user of the computing device.

## Description

### BACKGROUND

Hearing assistance devices, such as hearing aids, have firmware that enables the hearing assistance device to perform signal processing on incoming audio and output it for a user. For example, the firmware may instruct the hardware to take an input sound signal from a microphone in the hearing assistance device and process it according to instructions in the firmware and finally to output the processed signal to a speaker, transducer, or the like. A wearer of a hearing aid may learn about features supported by the firmware of the hearing aid by a vendor of the hearing aid or by reading printed literature concerning the features.

### BRIEF DESCRIPTION OF DRAWINGS

Some embodiments are illustrated by way of example and not limitation in the figures of the accompanying drawings in which:
**FIG. 1** illustrates an example overview diagram of dynamic media content delivery to a hearing assistance device, according to an example embodiment.
**FIG. 2** is a diagrammatic representation of a hearing aid feature application, according to an example embodiment.
**FIG. 3** illustrates a user interface of a hearing aid feature application, according to an example embodiment.
**FIG. 4** is a data flow diagram, according to an example embodiment
**FIG. 5** is a flow chart illustrating a method to retrieve media files, according to an example embodiment.
**FIG. 6** is a block diagram of a machine in the example form of a computer system within which instructions, for causing the machine to perform any one or more of the methodologies discussed herein, may be executed.

### DETAILED DESCRIPTION

The following detailed description of the present subject matter refers to subject matter in the accompanying drawings which show, by way of illustration, specific aspects and embodiments (also referred to as examples) in which the present subject matter may be practiced. These embodiments are described in sufficient detail to enable those skilled in the art to practice the present subject matter. References to "an", "one", or "various" embodiments in this disclosure are not necessarily to the same embodiment, and such references contemplate more than one embodiment. The following detailed description is demonstrative and not to be taken in a limiting sense. The scope of the present subject matter is defined by the appended claims, along with the full scope of legal equivalents to which such claims are entitled.

Hearing assistance devices have many features, but a technical problem remains that there may be no easy way for a wearer of a hearing assistance device to know which features are available on an individual hearing assistance device or how to use the features. For example, hearing assistance device may be small enough such that no display exists on the hearing assistance device and thus visual interactivity with the hearing assistance device may be difficult. Furthermore, a hearing assistance device may not have a list of features stored on the hearing assistance device itself, but instead may store settings of parameters of the features. Accordingly, retrieval of the settings by themselves may not inform a user of which features are available on a hearing assistance device.

Digital hearing assistance devices *(e.g.,* a hearing aid) use firmware to configure the hardware of the hearing assistance device to perform the functions of the hearing assistance device. For example, the firmware may instruct the hardware to take an input sound signal from a microphone in the hearing assistance device and process it according to instructions in the firmware and finally to output the processed signal to a speaker, transducer, or the like. Different instructions may enable different features of a hearing assistance device. For example, a set of instructions may enable a noise cancellation feature while another set of instruction may enable the digital hearing assistance device to connect with an audio transmitter attached to a wearer's television. Other features may include, but are not limited to, eliminating buzzing and whistling, speech enhancement in noisy environments, connecting with a mobile phone, and replicating hard to hear high frequencies in lower frequencies. Some features may be physically manipulated by a user. For example, there may be a physical volume control on a hearing aid.

The features available on a hearing assistance device may be communicated to a user *(e.g.,* a wearer of a hearing aid) at different times. In some instances, the features are communicated to the user in print or online. However, printed or text-based materials are often static and may not demonstrate how the various features of the hearing assistance device can be used effectively.

A user may also have features communicated to him/her by a clinician or dispenser of hearing assistance device. However, in-person communication may present other challenges. For example, a clinician may be pressed for time and may not be able to fully communicate how the hearing assistance device works and a dispenser may not understand the technology or how to leverage it effectively. Additionally, some features may be too technical for the user to understand, as may be the case with a new user of hearing aids. Lastly, communicated information is temporal in nature and the user may forget how to effectively use his/her hearing assistance device over time.

In various examples, a user is able to access multi-media content on-demand concerning the features of the user's hearing assistance device. The multi-media content may be dynamic in nature such that the content is tailored to the user's hearing assistance device. The content may accessible to multiple parties, including family members of a wearer. The content may allow the user to interact with the hearing assistance device at a personal pace without worrying about remembering everything all at once.

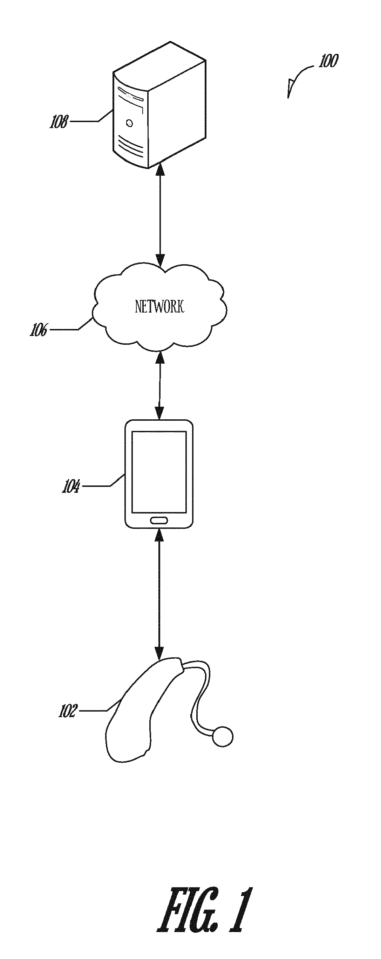

**FIG. 1** illustrates an example overview diagram 100 of dynamic media content delivery to a hearing assistance device, according to an example embodiment. Diagram 100 includes media server 108, network 106, computing device 104, and hearing assistance device 102. In various embodiments, computing device 104 and media server 108 communicate via network 106. Network 106 may include local-area networks (LAN), wide-area networks (WAN), wireless networks (e.g., 802.11 or cellular network), the Public Switched Telephone Network (PSTN) network, ad hoc networks, personal area networks (e.g., Bluetooth) or other combinations or permutations of network protocols and network types. Network 106 may include a single local area network (LAN) or wide-area network (WAN), or combinations of LAN's or WAN's, such as the Internet. The various devices coupled to network 106 may be coupled to network 106 via one or more wired or wireless connections.

Computing device 104 may be a personal computer or mobile device (e.g., smart phone, tablet computer). In an embodiment, computing device 104 stores a client program (*e.g.,* hearing aid feature application) to interface with hearing assistance device hearing assistance device 102 and media server 108. The client program may be commercial software, custom software, open source software, freeware, shareware, or other types of software packages. The client program may be downloaded from a server (*e.g.,* an application server provided by the manufacturer of computing device 104 or another network location) and updated periodically. In various examples, the client program on computing device 104 and hearing assistance device 102 communicate using one or more wired or wireless connections (*e.g.,* over a USB connection, Bluetooth, etc.).

In an embodiment, the client program is a thin client designed to provide query and data manipulation tools for a user of computing device 104. For example, the logic of the hearing aid feature application (also referred to as a feature application) may be stored on an external server and a browser running on computing device 104 may present the software interfaces to a user to interact with the application.

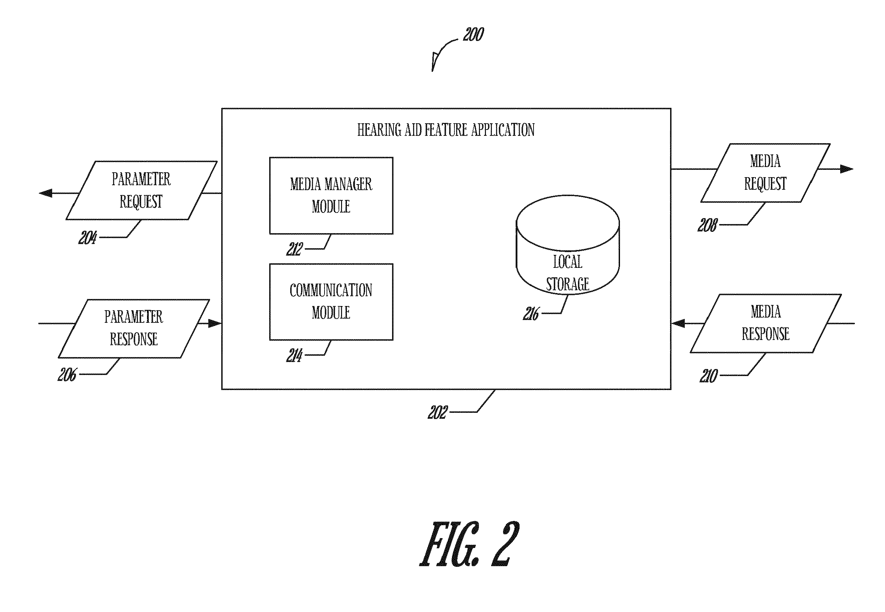

**FIG. 2** is a diagrammatic representation 200 of a hearing aid feature application 202, according to an example embodiment. The hearing aid feature application may be used to retrieve and display media files (video files, text files, help files, audio files, interactive applications, animations, etc.) associated with features of a hearing assistance device. Inputs and outputs to hearing aid feature application 202 may include parameter request 204, parameter response 206, media request 208, and media response 210. As illustrated, hearing aid feature application 202 includes media manager module 212, communication module 214, and local storage 216.

In various examples, communications module 214 may be a hardware-implemented module that includes a processor configured by a set of instructions. For example, the configured processor may instruct a network device *(e.g.,* a Bluetooth transceiver or network interfaced card) of a computing device to transmit parameter request 204 and media request 208. Similarly, communications module 214 may receive, via one or more network devices, parameter response 206 and media response 210.

In various examples, feature application 202 may maintain data on the various features that are supported by a hearing assistance device and media files associated with those features. The data may be organized in numerous ways without departing from the scope of this disclosure. For example, a list of features of the hearing assistance device may be stored in a structured file *(e.g.,* XML) or in a database (flat file, relational, non-relational). Within a database/file there may be a mapping between a feature and one or more media files *(e.g.,* video files, audio files, interactive applications, picture files, text files, or combinations thereof). For example, an entry in a feature file for a hearing assistance device may be:
Volume Control : "Volume Video.avi"
The "Volume Video.avi" may refer to the title of a media file associated with the feature "Volume Control." In an example, media files may be stored in local storage device 216. The local storage (*e.g*., a hard disk drive, flash memory, etc.) may be part of computing device 104. In various examples features and associated media files may be stored for multiple hearing assistance devices.

In various examples, media manager module 206 may be a hardware-implemented module that includes a processor configured by a set of instructions. For example, the configured processor may instruct a computing device (*e.g.,* computing device 104) to display a list of features of a hearing assistance device, receive a selection of a feature, and playback a media file associated with the selected feature. Media manager module 214 may further instruct communications module 214 to send and receive messages as discussed previously. Media manager module 214 may also parse received messages, update configuration files, and store/retrieve media files from local storage 216.

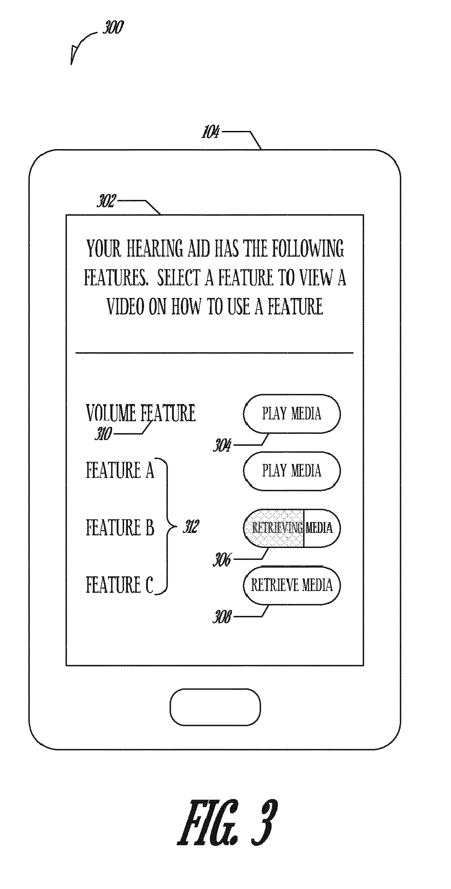

**FIG. 3** illustrates a user interface of a hearing aid feature application, according to an example embodiment. In an example, the user interface is presented on display device 302 of computing device 104. Display device 302 may be a LCD or LED display device and may be touch-screen, (*e.g.,* resistive or capacitive) and thus may function as both an input and output device. Computing device 104 may include other input mechanism such as a mouse, keyboard, voice controls, or gesture controls.

Display device 302 illustrates a user interface with instructions to a user of the feature application. The instructions indicate that a user may select a feature in order to view a video of how to use the feature; however, the instructions may be changed and other types of files beyond video may also be used. As depicted, "Volume Feature", 310, is associated with input button 304. In other words, a user may select input button 304 to begin playing a video associated with "Volume Feature", 310. A user may select input button 304 by touching the button with an input device *(e.g.,* a finger, stylus, mouse click). In various embodiments, other input areas may be defined to begin playback such as selecting the title of the feature (*i.e.,* "Volume Feature).

In various examples, media files for a feature may not be immediately available for playback when a user launches the feature application. For example, the media file may be downloaded from media server 108 to computing device 104 before playback may begin via feature application 202. Button 306 indicates that media for "Feature B" is currently being retrieved. A user may activate button 308 to retrieve media for "Feature C". In various examples, the media files are streamed from media server 108 to computing device 104.

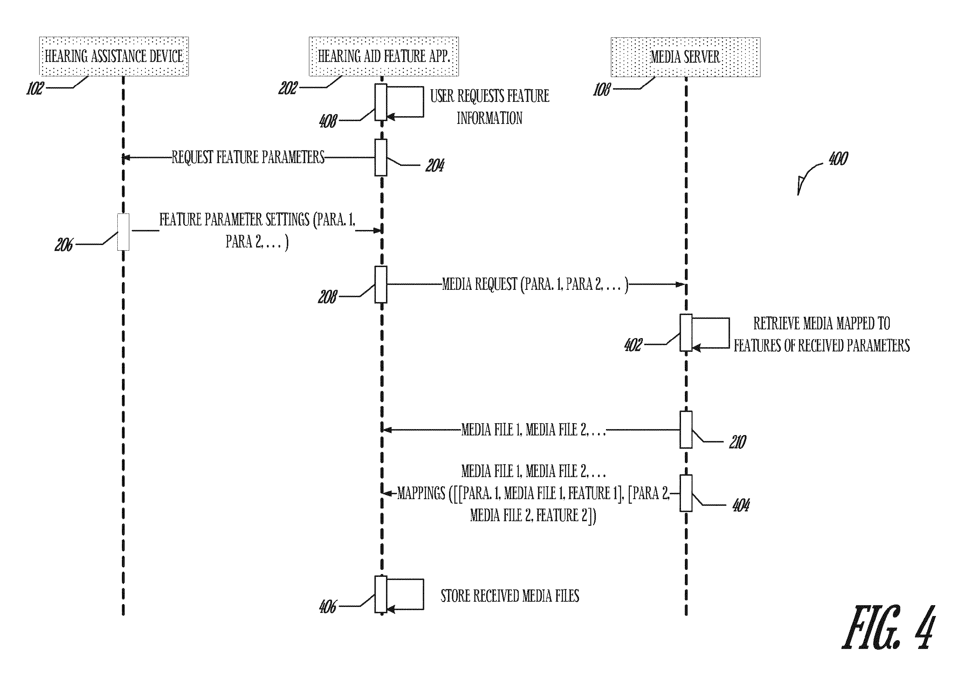

**FIG. 4** is a data flow diagram 400, according to an example embodiment. The messages/data depicted flow between hearing assistance device 102, feature application 202, and media server 108, for retrieving one or more media files. The order of messages shown is for illustration purposes and should not be used to indicate a required order of messages that are exchanged. The names of the message calls and variables are also for illustration purposes, and other names may be used without departing from the scope of this disclosure. Additionally, while "feature application" is used in the examples below, other applications may similarly transmit and receive responses from a hearing assistance device and media server.

In various examples, the messages/data that are illustrated as being received by feature application may be received using a computing device (*e.g.,* computing device 104) and forwarded to feature application 202 for processing. Similarly, messages/data that are illustrated as being sent from feature application 202 maybe transmitted using the computing device.

In various examples, a user may open *(e.g.,* click, touch, etc., an icon representing the feature application) on a computing device. In an example, a user requests to see features available on a hearing assistance device (408). Upon opening, feature application 202 may transmit parameter request 204 to hearing assistance device 102 requesting feature parameters. Parameter request may be transmitted automatically upon opening the feature application 202 or upon a user request (408) to view features of a hearing assistance device. Parameter request 204 may be used to determine the parameters that are set on hearing assistance device 102. The parameters, as discussed further below, may be used as a proxy to determine which feature are available on hearing assistance device 102.

In an example, in response to parameter request 204, hearing assistance device 102 may transmit parameter response 206 that includes one or more parameter settings of hearing assistance device 102. For example, a parameter may be "volume_setting" and its value may be '3'. In an example, all parameters with a valid setting (*e.g.,* non-empty or out-of-range) are transmitted in a message as parameter response 206 with the parameters and settings arranged as a series of parameter/value pairs (*e.g.,* "Para 1 = 2", "Para 2 = 3"). In an example, the value of the parameter is not transmitted in parameter response 206.

In an example, feature application 202 may transmit media request 208 to media server 108 with the one or more of the parameters and values received in parameter response 206. In various examples, the settings of the parameters are omitted from media request 208. Media server 108 receives media request 208 and parses the request to retrieve the included parameter(s). Media server 108 may then retrieve media mapped to features of the parsed parameters (402).

In various embodiments, a parameter is associated with a feature of a hearing assistance device. For example, if the parameter is "volume_setting" then the corresponding feature may be "Volume Control." Similarly if a parameter is "background_noise_cancellation_sensitivity" then the corresponding feature may be a noise cancellation feature. Media server 108 may store *(e.g.,* in a file or database) a mapping between the parameters and features. In some examples, the feature application stores the associations.

In various embodiments, media server 108 may have one or more media files stored on a storage device for a feature of a hearing assistance device. Accordingly, when media server 108 receives media request 402, the server may first determine which feature is mapped to a parameter included in the request and retrieve the one or more media files associated with the feature. The retrieved media files may be transmitted back to feature application 202 as media response 210 where they may be stored on a local storage device (406).

In various examples, in addition to the media files, media server 108 may transmit mapping message 404 which indicates one or more mappings between parameters, features, and media files. Thus, when feature application 202 receives mapping message 404, the software may be configured to playback the appropriate media file if a user requests media associated with a feature.

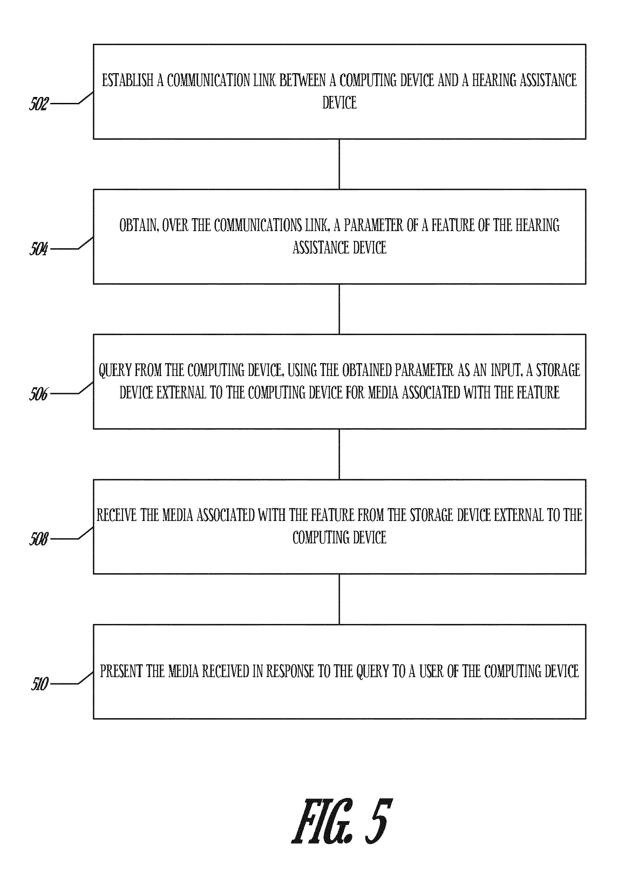

For example of how feature application 202 may use the messages described in **FIG. 4****,** consider a scenario depicted in **FIG. 5. FIG. 5** is a flow chart illustrating a method to retrieve media files, according to an example embodiment. When a user opens feature application 202, the software may present an screen instructing the user to pair a hearing assistance device with the computing device and thereby the feature application. Pairing may include establishing a physical connection with the computing device *(e.g.,* USB) or wireless connection (*e.g.,* Bluetooth, Wi-Fi Direct, etc.).

Upon establishing a connection link between the computing device and hearing assistance device (502), feature application 202 may retrieve a configuration file associated with the connected hearing assistance device which may be stored in a local storage device of the computing device or remotely. The association may be from an identification of the hearing assistance device *(e.g.,* a serial number) that was communicated over the communication link. If a configuration file is not present, a new configuration file may be created.

In various examples, a configuration file includes a list of features of a hearing assistance device and associated media files, which may be determined according to processes described herein. In various examples, more than one hearing assistance device may be associated with one configuration file. Other storage mechanisms may also be employed for storing configuration data of a hearing assistance device such as a database.

In an example, feature application 204 presents an option to a user to retrieve a media file of a feature supported by the hearing assistance device. In an example, feature application 304 presents an option to the user to retrieve media files for a set of features *(e.g.,* all) supported by the hearing assistance device. In an example, the request is for a previously determined feature *(e.g.,* as illustrated by button 308 with **FIG. 3****)** or for a feature that has not yet been determined. Upon detecting that the user has selected the option in the case in which a feature has not yet been determined, feature application 202 may transmit a request over the communication link to the hearing assistance device for parameter(s) of setting(s) of the hearing assistance device.

In various examples, a parameter of a feature, or parameters if a set of features is selected, of the hearing assistance device is obtained by the feature application (504). For example, a message may be transmitted from the hearing assistance device over the communications link that includes one or more parameter/value pairs to the computing device. In an example, the message is encrypted. In an example, hearing assistance device 102 transmits parameter(s), without a request from feature application 202, upon pairing with the computing device.

In various examples, feature application 202 queries a storage external to the computing device for media associated with the feature(s) using the obtained parameter(s) as an input (506). For example, a RESTful API call may be formatted by feature application 202 and transmitted to media server 108. In an example, parameters are received from hearing assistance device 102 and the external storage queried automatically upon the establishment of the connection link. The request may be for a set of media files or all of the media associated with a single feature or set of features. In response to the query request, media server 108 may determine a feature associated with the parameter(s) and retrieve media associated with the feature(s) from a storage device of media server 108. In an example, all media or a set of media associated with the feature(s) is retrieved. The media file may be stored in a location different than the media server.

In various examples, media associated with the feature may be received from the storage device external to the computing device (508). For example, the media (*e.g.,* video files, audio files, interactive applications, text instructions) may be received in response to the query in 506. The received media may be stored in a storage device local to the feature application. In addition to the media, information may be received indicating which feature the parameter is associated with as well as what media is associated with the feature. Thus, feature application 202 may store the media as associated with a parameter or feature.

In an example, the configuration file for the hearing assistance device is updated with the information received from media server 108. Accordingly, if not previously determined, the features supported by the hearing assistance device will appear in the configuration file as well as media and parameters associated with the features.

In an example, when a parameter is received over the communication link at the feature application, the configuration file may be checked to determine if a feature has been determined for the parameter, and if any associated media has been retrieved and stored locally. In various examples, instead of (or in addition to) a configuration file for each hearing assistance device, the feature application may maintain data *(e.g.,* a list, database, etc.) of what feature/media is associated with a parameter and whether or not the media is stored in a local storage device. This list may be updated based on the parameter/feature/media tuples received from media server. Thus, when a different hearing assistance device is paired with the feature application, media requests to a media server may be avoided (*e.g.,* the feature application is already aware of what features the different hearing assistance device has and has already retrieved the media files).

In various examples, the media received in response to the query is presented to a user of the computing device (510). For example, presenting may including retrieving the media from the local storage device and displaying it on a display screen of the computing device. In various examples, a user may select a button in a user interface to begin the presentation (*e.g.,* button 304 with respect to **FIG. 3****).** In an example, the media is a video of how to use the feature. Presenting may further include playing an audio file, opening a text file, launching an interactive application, playing an animation, etc., depending on the type of media file. In an embodiment a list of features may be displayed to a user indicating that media for a feature is not yet available to be played.

In an example embodiment, media for a feature may not be automatically downloaded from a media server. For example, parameter(s) for feature(s) may be received from a hearing assistance device by the feature application and transmitted to the media server as described above. However, the response from the media server may be a list of parameter/feature pairings, but no media files. Thus, an interface may be presented to a user that presents information identifying the features supported by the connected hearing assistance device and associated with the transmitted parameters, but without the media being immediately available.

In an example, the media may be obtained based upon a user indicating a wish to playback the media via an input element *(e.g.,* a button) and determining that the media is not stored on the local storage device. In an example, the media is streamed to the computing device for playback while being downloaded to the local storage device.

In various examples, playback of media files is not limited to when a hearing assistance device is paired with a computing device. For example, the feature application may present an interface that lists previously connected hearing assistance devices. A user may then select one of the hearing assistance devices and feature application may present an interface identifying the features available on the selected hearing assistance device. As described above, a user may then select a feature or button associated with the feature to present media associated with the feature. In various examples, when more than one media file is associated with a feature, multiple "play" buttons may be presented.

### MODULES, COMPONENTS AND LOGIC

Certain embodiments are described herein as including logic or a number of components, modules, or mechanisms. Modules may constitute either software modules (e.g., code embodied (1) on a non-transitory machine-readable medium or (2) in a transmission signal) or hardware-implemented modules. A hardware-implemented module is tangible unit capable of performing certain operations and may be configured or arranged in a certain manner. In example embodiments, one or more computer systems (e.g., a standalone, client or server computer system) or one or more processors may be configured by software (e.g., an application or application portion) as a hardware-implemented module that operates to perform certain operations as described herein.

In various embodiments, a hardware-implemented module may be implemented mechanically or electronically. For example, a hardware-implemented module may comprise dedicated circuitry or logic that is permanently configured (e.g., as a special-purpose processor, such as a field programmable gate array (FPGA) or an application-specific integrated circuit (ASIC)) to perform certain operations. A hardware-implemented module may also comprise programmable logic or circuitry (e.g., as encompassed within a general-purpose processor or other programmable processor) that is temporarily configured by software to perform certain operations. It will be appreciated that the decision to implement a hardware-implemented module mechanically, in dedicated and permanently configured circuitry, or in temporarily configured circuitry (e.g., configured by software) may be driven by cost and time considerations.

### EXAMPLE MACHINE ARCHITECTURE AND MACHINE-READABLE MEDIUM

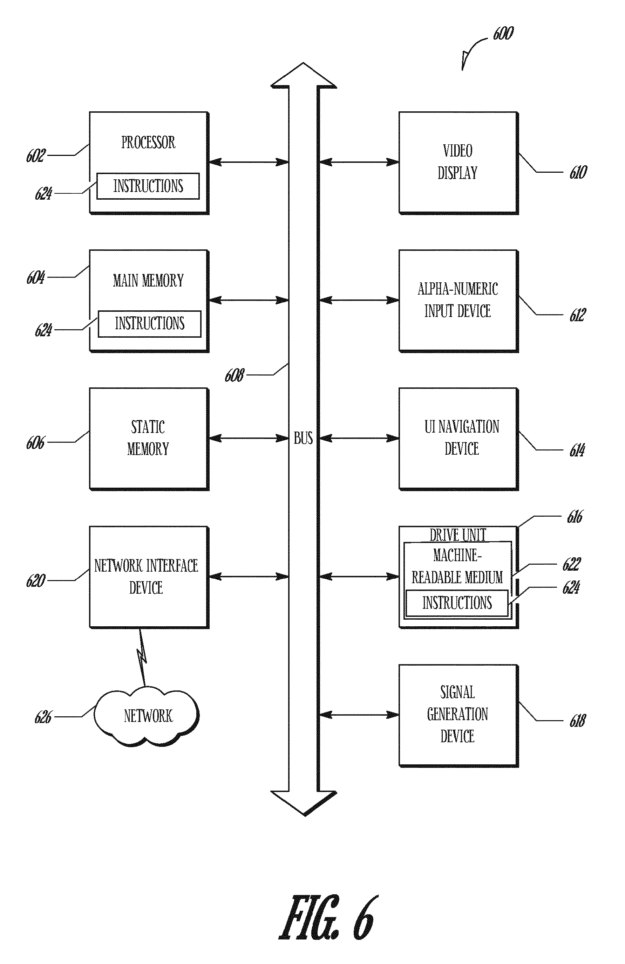

**FIG. 6** is a block diagram of a machine in the example form of a computer system 600 within which instructions, for causing the machine to perform any one or more of the methodologies discussed herein, may be executed. In alternative embodiments, the machine operates as a standalone device or may be connected (e.g., networked) to other machines. In a networked deployment, the machine may operate in the capacity of a server or a client machine in server-client network environment, or as a peer machine in a peer-to-peer (or distributed) network environment. The machine may be a personal computer (PC), a tablet PC, a set-top box (STB), a Personal Digital Assistant (PDA), a cellular telephone, a web appliance, a network router, switch or bridge, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein.

The example computer system 600 includes a processor 602 (e.g., a central processing unit (CPU), a graphics processing unit (GPU) or both), a main memory 604 and a static memory 606, which communicate with each other via a bus 608. The computer system 600 may further include a video display unit 610 (e.g., a liquid crystal display (LCD) or a cathode ray tube (CRT)). The computer system 600 also includes an alphanumeric input device 612 (e.g., a keyboard), a user interface (UI) navigation device 614 (e.g., a mouse), a disk drive unit 616, a signal generation device 618 (e.g., a speaker) and a network interface device 620.

### MACHINE-READABLE MEDIUM

The disk drive unit 616 includes a machine-readable medium 622 on which is stored one or more sets of instructions and data structures (e.g., software) 624 embodying or utilized by any one or more of the methodologies or functions described herein. The instructions 624 may also reside, completely or at least partially, within the main memory 604 and/or within the processor 602 during execution thereof by the computer system 600, the main memory 604 and the processor 602 also constituting machine-readable media.

While the machine-readable medium 622 is shown in an example embodiment to be a single medium, the term "machine-readable medium" may include a single medium or multiple media (e.g., a centralized or distributed database, and/or associated caches and servers) that store the one or more instructions or data structures. The term "machine-readable medium" shall also be taken to include any tangible medium that is capable of storing, encoding or carrying instructions for execution by the machine and that cause the machine to perform any one or more of the methodologies of the present invention, or that is capable of storing, encoding or carrying data structures utilized by or associated with such instructions. The term "machine-readable medium" shall accordingly be taken to include, but not be limited to, solid-state memories, and optical and magnetic media. Specific examples of machine-readable media include non-volatile memory, including by way of example semiconductor memory devices, e.g., Erasable Programmable Read-Only Memory (EPROM), Electrically Erasable Programmable Read-Only Memory (EEPROM), and flash memory devices; magnetic disks such as internal hard disks and removable disks; magneto-optical disks; and CD-ROM and DVD-ROM disks.

### TRANSMISSION MEDIUM

The instructions 624 may further be transmitted or received over a communications network 626 using a transmission medium. The instructions 624 may be transmitted using the network interface device 620 and any one of a number of well-known transfer protocols (e.g., HTTP). Examples of communication networks include a local area network ("LAN"), a wide area network ("WAN"), the Internet, mobile telephone networks, Plain Old Telephone (POTS) networks, and wireless data networks (e.g., WiFi and WiMax networks). The term "transmission medium" shall be taken to include any intangible medium that is capable of storing, encoding or carrying instructions for execution by the machine, and includes digital or analog communications signals or other intangible media to facilitate communication of such software.

Various embodiments of the present subject matter support wireless communications with a hearing assistance device. In various embodiments the wireless communications can include standard or nonstandard communications. Some examples of standard wireless communications include link protocols including, but not limited to, Bluetooth™, IEEE 802.11(wireless LANs), 802.15 (WPANs), 802.16 (WiMAX), cellular protocols including, but not limited to CDMA and GSM, ZigBee, and ultra-wideband (UWB) technologies. Such protocols support radio frequency communications and some support infrared communications. Although the present system is demonstrated as a radio system, it is possible that other forms of wireless communications can be used such as ultrasonic, optical, and others. It is understood that the standards which can be used include past and present standards. It is also contemplated that future versions of these standards and new future standards may be employed without departing from the scope of the present subject matter.

The wireless communications support a connection from other devices. Such connections include, but are not limited to, one or more mono or stereo connections or digital connections having link protocols including, but not limited to 802.3 (Ethernet), 802.4, 802.5, USB, ATM, Fibre-channel, Firewire or 1394, InfiniBand, or a native streaming interface. In various embodiments, such connections include all past and present link protocols. It is also contemplated that future versions of these protocols and new future standards may be employed without departing from the scope of the present subject matter.

It is understood that variations in communications protocols, antenna configurations, and combinations of components may be employed without departing from the scope of the present subject matter. Hearing assistance devices typically include an enclosure or housing, a microphone, hearing assistance device electronics including processing electronics, and a speaker or receiver. It is understood that in various embodiments the microphone is optional. It is understood that in various embodiments the receiver is optional. Antenna configurations may vary and may be included within an enclosure for the electronics or be external to an enclosure for the electronics. Thus, the examples set forth herein are intended to be demonstrative and not a limiting or exhaustive depiction of variations.

It is further understood that any hearing assistance device may be used without departing from the scope and the devices depicted in the figures are intended to demonstrate the subject matter, but not in a limited, exhaustive, or exclusive sense. It is also understood that the present subject matter can be used with a device designed for use in the right ear or the left ear or both ears of the wearer.

It is understood that digital hearing aids include a processor. In digital hearing aids with a processor programmed to provide corrections to hearing impairments, programmable gains are employed to tailor the hearing aid output to a wearer's particular hearing impairment. The processor may be a digital signal processor (DSP), microprocessor, microcontroller, other digital logic, or combinations thereof. The processing of signals referenced in this application can be performed using the processor. Processing may be done in the digital domain, the analog domain, or combinations thereof. Processing may be done using subband processing techniques. Processing may be done with frequency domain or time domain approaches. Some processing may involve both frequency and time domain aspects. For brevity, in some examples drawings may omit certain blocks that perform frequency synthesis, frequency analysis, analog-to-digital conversion, digital-to-analog conversion, amplification, and certain types of filtering and processing. In various embodiments the processor is adapted to perform instructions stored in memory which may or may not be explicitly shown. Various types of memory may be used, including volatile and nonvolatile forms of memory. In various embodiments, instructions are performed by the processor to perform a number of signal processing tasks. In such embodiments, analog components are in communication with the processor to perform signal tasks, such as microphone reception, or receiver sound embodiments (i.e., in applications where such transducers are used). In various embodiments, different realizations of the block diagrams, circuits, and processes set forth herein may occur without departing from the scope of the present subject matter.

The present subject matter is demonstrated for hearing assistance devices, including hearing aids, including but not limited to, behind-the-ear (BTE), in-the-ear (ITE), in-the-canal (ITC), receiver-in-canal (RIC), or completely-in-the-canal (CIC) type hearing aids. It is understood that behind-the-ear type hearing aids may include devices that reside substantially behind the ear or over the ear. Such devices may include hearing aids with receivers associated with the electronics portion of the behind-the-ear device, or hearing aids of the type having receivers in the ear canal of the user, including but not limited to receiver-in-canal (RIC) or receiver-in-the-ear (RITE) designs. The present subject matter can also be used in hearing assistance devices generally, such as cochlear implant type hearing devices and such as deep insertion devices having a transducer, such as a receiver or microphone, whether custom fitted, standard, open fitted or occlusive fitted. It is understood that other hearing assistance devices not expressly stated herein may be used in conjunction with the present subject matter.

This application is intended to cover adaptations or variations of the present subject matter. It is to be understood that the above description is intended to be illustrative, and not restrictive. The scope of the present subject matter should be determined with reference to the appended claims, along with the full scope of legal equivalents to which such claims are entitled.

## Claims

1. A method comprising:
establishing a communication link between a computing device and a hearing assistance device;
obtaining, over the communications link, a parameter of a feature of the hearing assistance device;
querying from the computing device, using the obtained parameter as an input, a storage device external to the computing device for media associated with the feature;
receiving the media associated with the feature from the storage device external to the computing device; and
presenting the media received in response to the query to a user of the computing device.

2. The method of claim 1, further comprising:
obtaining, from the hearing assistance device, a plurality of parameters;
determining a set of features associated with the plurality of parameters; and
presenting information identifying the set of features on a display screen of the computing device.

3. The method of claim 2, further comprising:
detecting user input of the information that identifies a selected feature of the set of features;
querying a local storage device of the computing device to determine if media for the selected feature is stored on the local storage device; and
based on the results of the query indicating that the media for the selected feature is not stored on the local storage, obtaining media for the selected feature from the storage device external to the computing device.

4. The method of claim 1, wherein the external database is queried in response to the communication link being established.

5. The method of claim 1, further comprising:
storing the received media on a local storage device of the computing device; and
associating the media with the feature of the hearing assistance device.

6. A computer-readable storage device with instructions stored thereon, which when executed by at least one processor, configure the at least one processor to:
establish a communication link between a computing device and a hearing assistance device;
obtain, over the communications link, a parameter of a feature of the hearing assistance device;
query from the computing device, using the obtained parameter as an input, a storage device external to the computing device for media associated with the feature;
receive the media associated with the features from the storage device external to the computing device; and
present the media received in response to the query to a user of the computing device.

7. The computer-readable storage device of claim 6, wherein the instructions, when executed by the at least one processor, configure the at least one processor to:
detect, on a computing device, that a user has requested to retrieve a media file before querying the database.

8. The computer-readable storage device of claim 6, wherein the external database is queried in response to the communication link being established.

9. The computer-readable storage device of claim 6, wherein the instructions, when executed by the at least one processor, configure the at least one processor to:
obtain, from the hearing assistance device, a plurality of parameters;
determine a set of features associated with the plurality of parameters; and
present information identifying the set of features on a display screen of the computing device.

10. The computer-readable storage device of claim 6, wherein the instructions, when executed by the at least one processor, configure the at least one processor to:
detect user input of the information that identifies a selected feature of the set of features;
query a local storage device of the computing device to determine if media for the selected feature is stored on the local storage device; and
based on the results of the query indicating that the media for the selected feature is not stored on the local storage, obtaining media for the selected feature from the storage device external to the computing device.

11. A system comprising:
at least one processor; and
a local storage device with instructions stored thereon, which when executed by the at least one processor, configure the at least one processor to:
establish a communication link between a computing device and a hearing assistance device;
obtain over the communications link a parameter of a feature of the hearing assistance device;
query from the computing device, using the obtained parameter as an input, a storage device external to the computing device for media associated with the feature;
receive the media associated with the features from the storage device external to the computing device; and
present the media received in response to the query to a user of the computing device.

12. The system of claim 11, wherein the at least one processor is further configured to:
detect, on a computing device, that a user has requested to retrieve a media file before querying the database.

13. The system of claim 11, wherein the external database is queried in response to the communication link being established.

14. The system of claim 11, wherein the at least one processor is further configured to:
store the received media on the local storage device; and
associate the media with the feature of the hearing assistance device.

15. The system of claim 11, wherein the at least one processor is further configured to:
obtain, from the hearing assistance device, a plurality of parameters;
determine a set of features associated with the plurality of parameters; and
present information identifying the set of features on a display screen of the computing device.
